# EUROPEAN PATENT APPLICATION

(11) **EP 4 328 203 A1**
(43) Date of publication of application: **28.02.2024**
(21) Application number: 22791684.8
(22) Date of filing: 15.04.2022
(51) Int. Cl.: C03C 27/12, B32B 17/10, B60J 1/00, C03B 27/04

(54) **LAMINATED GLASS FOR AUTOMOTIVE WINDOWS, AUTOMOBILE, AND METHOD FOR PRODUCING LAMINATED GLASS FOR AUTOMOTIVE WINDOWS**

(30) Priority: 20.04.2021 JP 2021071147
(71) Applicant: AGC INC., Chiyoda-ku, Tokyo 1008405 (JP)
(72) Inventor: YAMAKAWA, Hiroshi, Tokyo 100-8405 (JP); YAMASAKI, Daisuke, Tokyo 100-8405 (JP); FUKAMI, Masao, Tokyo 100-8405 (JP)
(74) Representative: Müller-Boré & Partner Patentanwälte PartG mbB
(86) International application number: PCT/JP2022/017959
(87) International publication number: WO 2022/224910

(57) **Abstract**

Laminated glass for automobile windows includes a first glass plate; an interlayer film; and a second glass plate in this order from a vehicle-exterior side toward a vehicle-interior side, wherein a first region having an edge compression of 21 MPa to 60 MPa and a second region having an edge compression of 8 MPa to 20 MPa are arranged alternately and repeatedly along a peripheral edge of the first glass plate or a peripheral edge of the second glass plate.

## Description

### TECHNICAL FIELD

The disclosures herein relate to laminated glass for automobile windows, an automobile, and a method for producing laminated glass for automobile windows.

### BACKGROUND ART

There is demand for techniques that reduce the impact on a person such as a pedestrian at the time of collision between an automobile and the person. For example, Patent Document 1 discloses a technique in which, when an impact is applied to the surroundings of a cowl louver and a windshield glass, the rear end portion of a cowl louver and the front end portion of windshield glass that are connected to each other by molding become separated, thereby reducing the impact on the person.

A laminated glazing in Patent Document 2 includes a first layer of soda-line-silicate glass, a second layer of chemically strengthened alkali aluminosilicate glass, and an adhesive interlayer film that joins together the first layer and the second layer. The protruding surface (surface facing the exterior of a vehicle or building) of the first layer has a surface compressive stress of 10 MPa to 20 MPa. Also, the first layer has an edge compression greater than 25 MPa.

A method for forming a glass article described in Patent Document 3 includes the providing of a first glass sheet. The first glass sheet is heated to a temperature suitable for shaping. The first glass sheet is deposited on a first bending tool. An edge portion of the first glass sheet is disposed over a shaping surface of the first bending tool. The shaping surface of the first bending tool is configured to provide, in the first glass sheet, a compression area and a tension area. The first glass sheet is shaped on the first bending tool and the compression area is formed in the edge portion of the first glass sheet. The compression area includes a first portion and a second portion. The first portion has a width which is greater than a width of a second portion.

### RELATED-ART DOCUMENTS

### PATENT DOCUMENTS

Patent Document 1: Unexamined Japanese Patent Application Publication No. 2017-213928
Patent Document 2: Published Japanese Translation of PCT International Application No. 2017-508693
Patent Document 3: Published Japanese Translation of PCT International Application No. 2020-520872

### SUMMARY OF THE INVENTION

### PROBLEM TO BE SOLVED BY THE INVENTION

There is demand for laminated glass for automobile windows such as a windshield to break appropriately at the time of a collision between an automobile and a person such as a pedestrian to reduce the impact on the person. For example, there is demand for laminated glass for automobile windows to have a Head Injury Criterion: HIC that is less than or equal to a desired value. At the same time, there is demand for the laminated glass for automobile windows to have an appropriate strength from the standpoint of durability.

According to one aspect of the present disclosure, a technique is provided in which an appropriate durability is obtained while also reducing the impact on a person at the time of a collision between an automobile and the person.

### MEANS TO SOLVE THE PROBLEM

According to one aspect of the present disclosure, laminated glass for automobile windows includes a first glass plate, an interlayer film, and a second glass plate in this order from a vehicle-exterior side toward a vehicle-interior side. A first region having an edge compression of 21 MPa to 60 MPa and a second region having an edge compression of 8 MPa to 20 MPa are arranged alternately and repeatedly along an peripheral edge of the first glass plate or a peripheral edge of the second glass plate.

### Effects of the Invention

According to one aspect of the present disclosure, an appropriate durability can be obtained while also reducing an impact on a person at the time of a collision between an automobile and the person.

### BRIEF DESCRIPTION OF THE DRAWINGS

[FIG. 1] FIG. 1 is a front view of an automobile provided with laminated glass according to an embodiment;
[FIG. 2] FIG. 2 is a cross-sectional view of a portion of the laminated glass according to the embodiment;
[FIG. 3] FIG. 3 is a diagram illustrating an example of a plane stress distribution that occurs during the cooling process after the glass plates are bend formed;
[FIG. 4] FIG. 4 is a diagram illustrating an example of a first region and a second region that are alternately arranged along a peripheral edge of the first glass plate;
[FIG. 5] FIG. 5 is a flowchart of a method for producing laminated glass according to the embodiment;
[FIG. 6] FIG. 6 is a top view illustrating an example of a cooling device to be used in step S3 of FIG. 5; and
[FIG. 7] FIG. 7 is a cross-sectional view of the cooling device of FIG. 6.

### DESCRIPTION OF THE PREFERRED EMBODIMENT

Next, the embodiment of the present disclosure is described with reference to the drawings. Throughout the drawings, the same components will be denoted by the same reference numeral, and duplicate descriptions may be omitted. Also, in this specification, numerical ranges expressed using "to" include the lower limit value and the upper limit value before and after the "to".

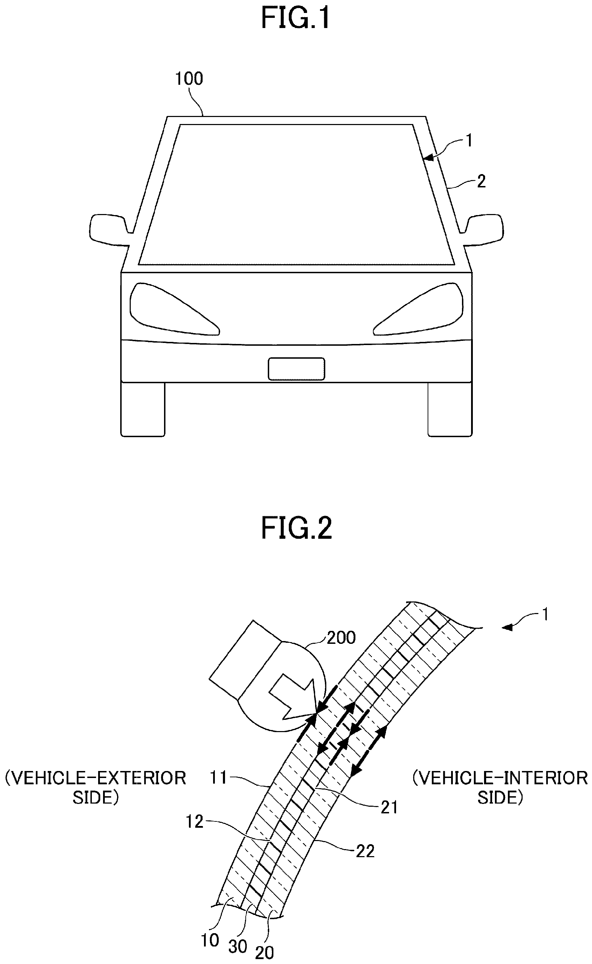

As illustrated in FIG. 1, an automobile 100 includes laminated glass for automobile windows 1 and a vehicle body 2 having an opening portion to which the automobile window laminated glass 1 is attached. Hereinafter, the laminated glass for automobile windows 1 is referred to simply as laminated glass 1. The laminated glass 1 is, for example, a windshield but the laminated glass 1 can also be window glass other than the windshield, examples of which include, side glass, rear glass, and roof glass.

As illustrated in FIG. 2, the laminated glass 1 includes a first glass plate 10, an interlayer film 30, and a second glass plate 20 in this order from a vehicle-exterior side toward a vehicle-interior side. The interlayer film 30 bonds the first glass plate 10 and the second glass plate 20 together. The first glass plate 10 has a first surface 11 that is a surface on the vehicle-exterior side and a second surface 12 that is a surface on the vehicle-interior side. The second glass plate 20 has a third surface 21 that is a surface on the vehicle-exterior side and a fourth surface 22 that is a surface on the vehicle-interior side.

The first glass plate 10 and the second glass plate 20 may have the same material or may have material different from each other. Preferably, the material of the first glass plate 10 and the second glass plate 20 is inorganic glass. Examples of the inorganic glass include soda lime silicate glass, aluminosilicate glass, borate glass, lithium aluminosilicate glass, and borosilicate glass. The method for forming the inorganic glass into a plate shape is not particularly limited. Examples of the method include the float method.

The first glass plate 10 and the second glass plate 20 may be non-tempered glass (float glass). The non-tempered glass is glass obtained by shaping molten glass into a plate shape and annealing the glass, yet is not subjected to tempering treatment such as air-cooling tempering treatment or chemical tempering treatment. The non-tempered glass is unlikely to form reticular shaped or cobweb shaped fine cracks when the non-tempered glass breaks when sustaining an impact.

The thickness of first glass plate 10 and the thickness of the second glass plate 20 may be the same or may be different from each other. The thickness of the first glass plate 10 may be 1.1 mm or more and 3.5 mm or less. Also, the thickness of the second glass plate 20 may be 0.5 mm or more and 2.3 mm or less. Further, the total thickness of the laminated glass 1 may be 2.3 mm or more and 8.0 mm or less.

The material of the interlayer film 30 is not particularly limited but preferably is a thermoplastic resin. Examples of the material of the interlayer film 30 include thermoplastic resins conventionally used for the same purpose, such as plasticized polyvinyl acetal resins, plasticized polyvinyl chloride resins, saturated polyester resins, plasticized saturated polyester resins, polyurethane resins, plasticized polyurethane resins, ethylene-vinyl acetate copolymer resins, ethylene-ethyl acrylate copolymer resins, cycloolefin polymer resins, and ionomer resins. Further, resin compositions containing a modified hydrogenated block copolymer described in Japanese Patent No. 6065221 can also be suitably used. Among them, plasticized polyvinyl acetal resins are considered to be a suitable material because they have an excellent balance of various characteristics such as transparency, weather resistance, strength, adhesiveness, penetration resistance, impact energy absorption, moisture resistance, heat insulation, and sound insulation. The above thermoplastic resins may be used alone or two or more of these thermoplastic resins may be used in combination. "Plasticized" in the plasticized polyvinyl acetal resin means that the resin is plasticized by the addition of a plasticizer. The same applies to other plasticized resins.

The material of the interlayer film 30 may be a resin not containing a plasticizer, for example, an ethylene-vinyl acetate copolymer resin. Examples of the above-described polyvinyl acetal resin include a polyvinyl formal resin obtained by reacting polyvinyl alcohol (PVA) with formaldehyde, a narrowly defined polyvinyl acetal resin obtained by reacting PVA with acetaldehyde, and a polyvinyl butyral resin (PVB) obtained by reacting PVA with n-butyraldehyde. In particular, PVB is considered to be a suitable material because it has an excellent balance of various characteristics such as transparency, weather resistance, strength, adhesiveness, penetration resistance, impact energy absorption, moisture resistance, heat insulation, and sound insulation. The above-mentioned resins may be used alone or two or more of these resins may be used in combination.

The interlayer film 30 may be a single-layer structure or a multi-layer structure. The interlayer film 30 may have functions other than adhesion. For example, the interlayer film 30 may include one or more selected from a sound insulation layer, a colored transparent layer, an ultraviolet cut layer, and an infrared cut layer.

The thickness of the interlayer film 30 is 0.5 mm or more from the standpoint of adhesiveness. Also, the thickness of the interlayer film 30 is 3 mm or less from the standpoint of reduction of weight and handleability. The thickness of the interlayer film 30 may be constant or may vary depending on the position. For example, when an image of a head-up display is projected onto the laminated glass 1, the thickness of the interlayer film 30 increases from the lower side to the upper side in order to suppress an occurrence of a double image. The interlayer film 30 is formed in a shape of a wedge, and a wedge angle is, for example, 1.0 mrad or less.

The method for producing the laminated glass 1 includes, for example, the following steps (A) to (C). (A) A laminate is fabricated by stacking the first glass plate 10 on the second glass plate 20 via the interlayer film 30. (B) The laminate is put inside a rubber bag and the rubber bag is heated while depressurizing the inside of the rubber bag, thereby causing the first glass plate 10 and the second glass plate 20 to adhere to the interlayer film 30. The pressure inside the rubber bag is, for example, -100 kPa to -65 kPa relative to the atmospheric pressure. The heating temperature of the rubber bag is, for example, 70°C to 110°C. (C) The laminate is removed from the rubber bag and heated at a temperature of 100°C to 150°C, thereby causing the pressure bonding at a pressure of 0.6 MPa to 1.3 MPa. For the pressure bonding, an autoclave is be used, for example. The method for producing the laminated glass 1 may be a typical method, and thus the aforementioned step (C) may be omitted.

As illustrated in FIG. 2, laminated glass 1, for example, may be entirely or partially curved so as to be convex on the vehicle-exterior side. Although the laminated glass 1 is multi-curved glass such that the shape is curved in both the forward-rearward direction and the vertical direction of the vehicle, the laminated glass 1 may be single-curved glass such that the shape is curved only in either the forward-rearward direction or the vertical direction. The radius of curvature of the laminated glass 1 is, for example, 200 mm or more and 300,000 mm or less.

The first glass plate 10 and the second glass plate 20 are bend formed before the aforementioned step (A). The bend forming is performed with the glass in a heat-induced softened state. The temperature at which glass is heated at the time of bend forming is, for example, 550°C to 700°C. The first glass plate 10 and the second glass plate 20 may be bend formed separately or may be stacked and bend formed at the same time. The bend forming includes, for example, gravity forming, press forming, or a combination thereof.

The glass plates 10 and 20 are heated at the time of bend forming and then cooled. The peripheral edges of the glass plates 10 and 20 tend to cool more quickly than the center of the glass plates 10 and 20. As a result, compressive stress occurs on the peripheral edges of the glass plates 10 and 20. Also, tensile stress that balances the compressive stress occurs.

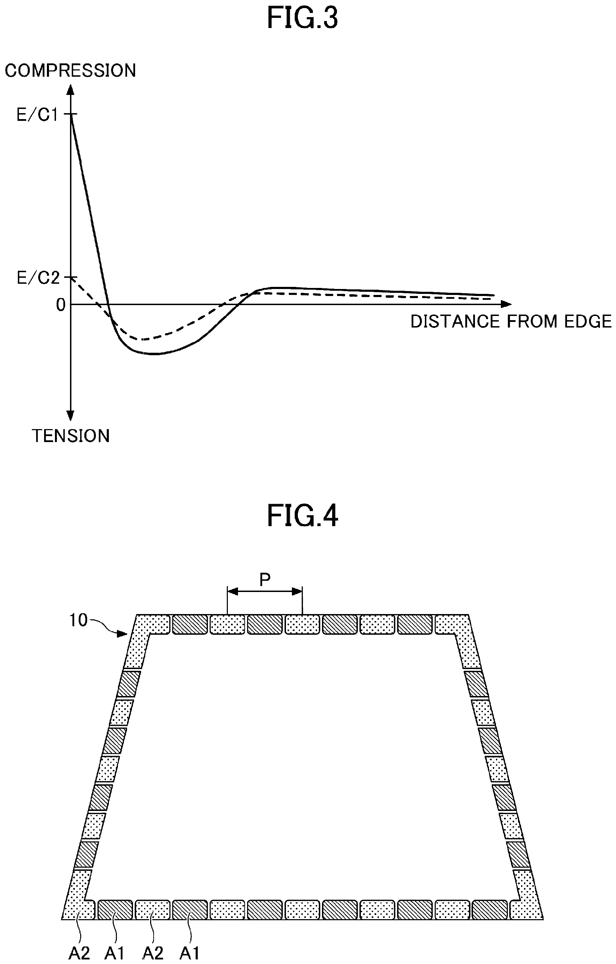

FIG. 3 is a diagram illustrating an example of a plane stress distribution that occurs during the cooling process after the glass plates 10 and 20 are bend formed. In the present specification, the term "plane stress" is plane stress that is measured by using a photoelasticity technique, and means a value obtained by integrating a difference (principal stress difference) between principal stresses anisotropically acting in plane directions (directions perpendicular to a plate thickness direction) over the entire plate thickness direction.

The plane stress of the glass plates 10 and 20 are measured by, for example, an AGES-Meter manufactured by Orihara Industrial Co., Ltd. The plane stress of the glass plates 10 and 20 are measured after the bend forming of the glass plates 10 and 20.

The glass plates 10 and 20 include an outer-side region in which plane compressive stress is generated, an intermediate region in which plane tensile stress is generated, and an inner-side region in which plane compressive stress is generated in this order from the peripheral edges of the glass sheets 10 and 20 toward the inner side. The width of the outer-side region is, for example, 5 mm to 15 mm. The width of the intermediate region is, for example, 20 mm to 50 mm.

The plane compressive stress in the peripheral edges of the glass plates 10 and 20 are referred to as edge compression also known as E/C. Typically, press-formed glass plates 10 and 20 have a high E/C compared to gravity-formed glass plates 10 and 20. The press-formed glass plates 10 and 20 are, for example, 21 MPa or more (preferably 25 MPa or more). Press forming is typically performed one plate at a time.

In FIG. 3, E/C1 is the maximum value of E/C in a first region A1 described further below, whereas and E/C2 is the minimum value of E/C in a second region A2 described further below. Also, in FIG. 3, the solid line illustrates a distribution of the plane stress in the vicinity of the first region A1, whereas the broken line illustrates a distribution of the plane stress in the vicinity of the second region A2.

There is demand for the laminated glass 1, as illustrated in FIG. 2, to break appropriately at the time of a collision between the automobile 100 and a person 200 such as a pedestrian to reduce the impact on the person 200. For example, there is demand for the laminated glass 1 to have a Head Injury Criterion: HIC that is less than or equal to a desired value (for example, 1,000 or less, preferably 650 or less). At the same time, there is demand for the laminated glass 1 to have an appropriate strength from the standpoint of durability.

At the time of collision between the automobile 100 and the person 200, the laminated glass 1 gets pushed from the vehicle-exterior side toward the vehicle-interior side. As a result, tensile stress forms on the second surface 12 that is the vehicle-interior side of the first glass plate 10, and thus breaking occurs on the second glass plate 20 starting where the defect is on the second surface 12. Also, tensile stress forms on the fourth surface 22 that is the vehicle-interior side of the second glass plate 20, and thus breaking occurs on the second glass plate 20 starting where the defect is on the fourth surface 22. In both the first glass plate 10 and the second glass plate 20, cracking extends from the vehicle-interior side to the vehicle-exterior side.

In order to reduce the HIC of the laminated glass 1, it is ideal to reduce the strength of the glass plates 10 and 20 at the collision point between the laminated glass 1 and the person 200. However, the strength of the glass plates 10 and 20 varies, and consequently the glass plates 10 and 20 might not break at the collision point. In such a case, impact stress propagates from the collision point of the glass plates 10 and 20 to the respective peripheral edges. There is demand for the first glass plates 10 and 20 to break in a case where the impact stress reaches the peripheral edges of the glass plates 10 and 20. At the same time, there is demand for the peripheral edges of the glass plates 10 and 20 to have an appropriate strength from the standpoint of durability.

In one aspect of the present disclosure, as illustrated in FIG. 4, a first region A1 in which the E/C is from 21 MPa to 60 MPa (preferably from 25 MPa to 40 MPa), and a second region A2 in which the E/C is from 8 MPa to 20 MPa (preferably from 8 MPa to 15 MPa) are alternately and repeatedly arranged along the peripheral edge of the first glass plate 10. Also, although not illustrated, in another aspect of the present disclosure, the first region A1 and the second region A2 are alternately and repeatedly arranged along the peripheral edge of the second glass plate 20.

In a case where the E/C along the entirety of the peripheral edges of the glass plates 10 and 20 is 21 MPa or more, defects such as processing scratches that exist on the peripheral edges of the glass plates 10 and 20 are unlikely to spread out. A processing scratch is what occurs during, for example, the chamfering processing. In the case where the second region A2 with an E/C of 20 MPa or less is provided, the defects that exist on the peripheral edges of the glass plates 10 and 20 are likely to spread out, and thus the glass plates 10 and 20 break appropriately at the time of the collision between the automobile 100 and the person 200. Also, as long as the E/C of the second region A2 is 8 MPa or more, that is, the E/C is 8 MPa or more along the entirety of the peripheral edge of the glass plates 10 and 20, an appropriate durability can be obtained.

Next, the case where the first region A1 and the second region A2 are arranged alternately and repeatedly along the peripheral edge of the first glass plate 10 is described. A description regarding the case in which the first region A1 and the second region A2 are arranged alternately and repeatedly along the peripheral edge of the second glass plate 20 is omitted because the description is the same as that of the first glass plate 10. It is sufficient as long as the first region A1 and the second region A2 are arranged on at least one of the first glass plate 10 and the second glass plate 20.

The first region A1 and the second region A2 may be arranged alternately and repeatedly along the entirety of the peripheral edge of the first glass plate 10, as illustrated in FIG. 4. The HIC can be reduced along the entirety of the peripheral edge of the first glass plate 10. It is to be noted that it is sufficient as long as the second region A2 is provided in an area with which the possibility of the person 200 colliding is high, and thus the second region A2 may be provided alternately and repeatedly along a portion (lower edge, for example) of the peripheral edge of the first glass 10.

The points where the E/C are lowest in the respective second regions a2 may be provided at a pitch P of 30 mm to 200 mm along the peripheral edge of the first glass plate 10. As long as the pitch P is 200 mm or less, breakage is likely to occur near the collision point with the person 200. The pitch P is preferably 100 mm or less. If the pitch P is 10 mm or more, however, the degree of complexity of the configuration of the cooling device 300 can be controlled. The pitch P is preferably 30 mm or more.

The second region A2 may be provided at the corners of the first glass plate 10. For example the second region A2 may be provided at the four corners of the first glass plate 10. The corners of the laminated glass 1 are restricted in two directions so the corners in particular are unlikely to deform. In order to reduce the HIC at the corners of the laminated glass 1, it is effective to arrange the second regions A2 at the corners of the laminated glass 1.

It is preferable to provide the first region A1 and the second region A2 on both the first glass plate 10 and the second glass plate 20. That is, it is preferable that the first region A1 and the second region A2 are alternately and repeatedly arranged along the peripheral edge of the first glass plate 10, and the first region A1 and the second region A2 are alternately and repeatedly arranged along the peripheral edge of the second glass plate 20. Both the first glass plate 10 and the second glass plate 20 readily break, and thus, any impact is readily absorbed.

Although not illustrated, the second region A2 of the first glass plate 10 and the second region A2 of the second glass plate 20 may overlap with each other as viewed in a direction perpendicular to the first surface 11 that is the vehicle-exterior side surface of the first glass plate 10. When the automobile 100 and the person 200 collide with each other, the first glass plate 10 and the second glass plate 20 are broken at points close to each other, and thus the impact is absorbed in a short period of time. The second region A2 of the first glass plate 10 and the second region A2 of the second glass plate 20 need not completely overlap with each other. It is sufficient as long as the second region A2 of the first glass plate 10 and the second region A2 of the second glass plate 20 partially overlap with each other.

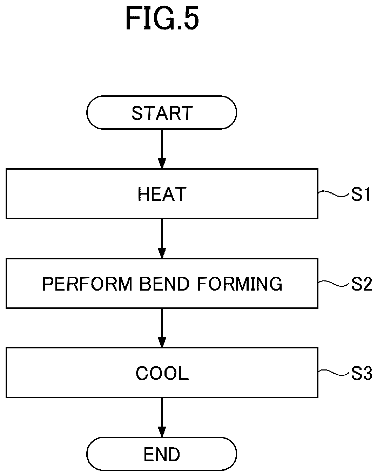

Next, the method for producing the laminated glass 1 is described with reference to FIG. 5. The method for producing the laminated glass 1 includes, for example, steps S1 to S3. In step S1, the glass plates 10 and 20 are heated. The heating temperature is, for example 550°C to 700°C. In step S2, the heated glass plates 10 and 20 are bend formed. The bend forming includes, for example, press forming. In step S3, the bend-formed glass plates 10 and 20 are cooled by gas.

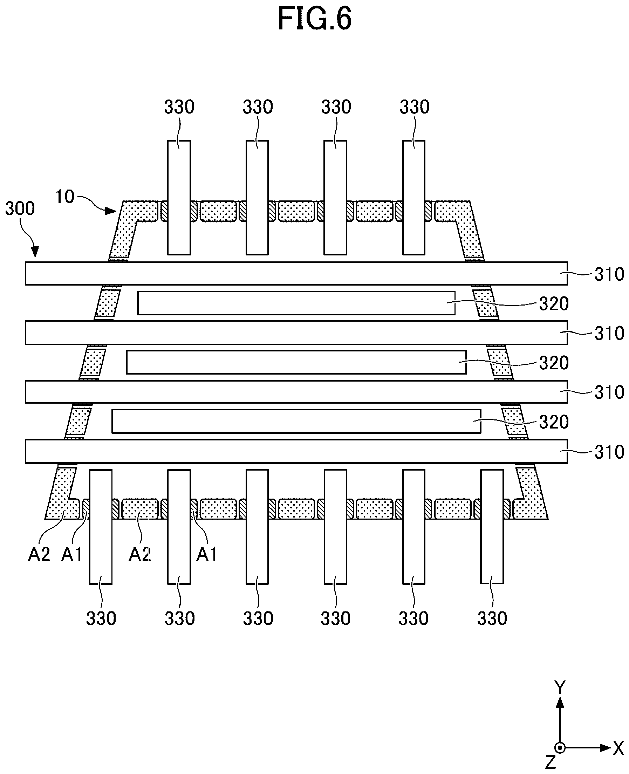

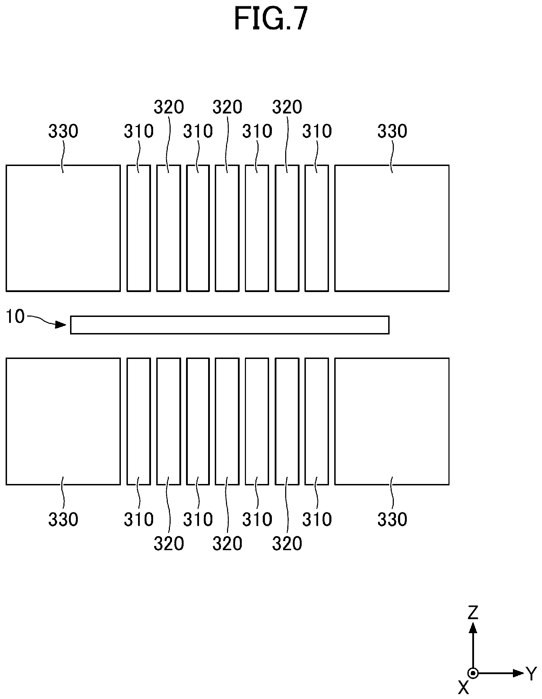

Next, an example of a cooling device 300 to be used in step S3 of FIG. 5 is described with reference to FIG. 6 and FIG. 7. In FIG. 6 and FIG. 7, the X-axis direction, the Y-axis direction, and the Z-axis direction are directions perpendicular to one another. The X-axis direction is a first horizontal direction, the Y-axis direction is a second horizontal direction, and the Z-axis direction is a vertical direction.

Next, the cooling of the first glass plate 10 by using the cooling device 300 is described. Since the cooling of the second glass plate 20 is the same as that of the first glass plate 10, the description thereof is omitted. For example, as the first glass plate 10 is being conveyed in the Y-axis direction, the first glass plate 10 is temporarily stopped partway where cooling of the first glass plate 10 is then performed by the cooling device 300.

As illustrated in FIG. 6, the cooling device 300 includes both a first nozzle 310 that is longer than the first glass plate 10 in the X-axis direction and a second nozzle 320 that is shorter than the first glass plate 10 in the X-axis direction. The first nozzle 310 and the second nozzle 320 have, for example, a blade shape and are provided in parallel with each other. The first nozzle 310 and the second nozzle 320 are alternately and repeatedly provided in the Y-axis direction, and both discharge gas toward the first glass plate 10 in the Z-axis direction. Air or nitrogen gas is used as the gas.

The first nozzle 310 and the second nozzle 320 alternately form a region to which the gas is blown and a region to which the gas is not blown on both edges of the first glass plate 10 in the X-axis direction. The region to which the gas is not blown is less likely to cool than the region to which the gas is blown, and tends to contract later than the region to which the gas is blown. As a result, variations in the E/C occur on both edges of the first glass plate 10 in the X-axis direction. The region to which the gas is blown corresponds to the first region A1, and the region to which the gas is not blown corresponds to the second region A2.

The cooling device 300 includes multiple third nozzles 330 provided at intervals in the X-axis direction. The third nozzle 330 has, for example, a blade shape. The third nozzle 330 discharges the gas in the Z-axis direction toward one edge of the first glass plate 10 in the Y-axis direction.

Multiple third nozzles 330 alternately form a region to which the gas is blown and a region to which the gas is not blown on one edge of the first glass plate 10 in the Y-axis direction. As a result, the first region A1 and the second region A2 are arranged alternately on one end of the first glass plate 10 in the Y-axis direction.

The third nozzle 330 is provided so as to be perpendicular to one edge of the first glass plate 10 as viewed in the vertical direction. The boundary between the first region A1 and the second region A2 can be provided so as to be perpendicular to one edge of the first glass plate 10.

Two rows of the third nozzles 330 may be provided as viewed in the vertical direction. One row may be provided so as to overlap with one edge of the first glass plate 10 in the Y-axis direction, and the other row may be provided so as to overlap with the other edge of the first glass plate 10 in the Y-axis direction. The first glass plate 10 may have two edges that are parallel to each other and the third nozzles 330 may be provided such that there is one row of the third nozzles 330 on each edge.

As illustrated in FIG. 7, the first nozzles 310 and the second nozzles 320 may be provided on both the upper and lower sides of the first glass plate 10. In addition, the third nozzles 330 may be provided on both upper and lower sides of the first glass plate 10. The first glass plate 10 can be uniformly cooled from both the upper and lower sides.

The laminated glass for automobile windows, the automobile, and the method for producing laminated glass for automobile windows of the present disclosure have been described above. However, the present disclosure is not limited to the embodiments above. Various modifications, changes, substitutions, additions, deletions, or any combination of the embodiments can be made within the scope set forth in the present disclosure. These are naturally considered as contained within the technical scope of the present disclosure.

The present application claims priority under Japanese Patent Application No. 2021-071147 that was filed to the Japan Patent Office on April 20, 2021, the entire contents of which are incorporated herein by reference.

### [Description of the Reference Signs]

- 1: Laminated glass for automobile windows
- 10: First glass plate
- 20: Second glass plate
- 30: Interlayer film
- A1: First region
- A2: Second region

## Claims

1. Laminated glass for automobile windows comprising:
a first glass plate;
an interlayer film; and
a second glass plate in this order from a vehicle-exterior side toward a vehicle-interior side,
wherein a first region having an edge compression of 21 MPa to 60 MPa and a second region having an edge compression of 8 MPa to 20 MPa are arranged alternately and repeatedly along a peripheral edge of the first glass plate or a peripheral edge of the second glass plate.

2. The laminated glass for automobile windows according to claim 1, wherein points where the edge compression is lowest in the respective second regions are provided at a pitch of 30 mm to 200 mm along the peripheral edge of either the first glass plate or the second glass plate.

3. The laminated glass for automobile windows according to claim 1, wherein the second region is provided at a corner of either the first glass plate or the second glass plate.

4. The laminated glass for automobile windows according to claim 1, wherein the first region and the second region are alternately and repeatedly arranged along the peripheral edge of the first glass plate, and the first region and the second region are alternately and repeatedly arranged along the peripheral edge of the second glass plate.

5. The laminated glass for automobile windows according to claim 4, wherein the second region of the first glass plate and the second region of the second glass plate overlap with each other as viewed in a direction perpendicular to a vehicle-exterior side surface of the first glass plate.

6. An automobile comprising:
the laminated glass for automobile windows of any one of claims 1 to 5; and
a vehicle body that has an opening portion to which the laminated glass for automobile windows is attached.

7. A method for producing laminated glass for automobile windows that includes a first glass plate, an interlayer film, and a second glass plate in this order from a vehicle-exterior side toward a vehicle-interior side, the method comprising:
heating the first glass plate or the second glass plate;
bend forming the heated first glass plate or the heated second glass plate; and
cooling the bend-formed first glass plate or the bend-formed second glass plate by gas,
wherein a first nozzle that is longer than the first glass plate or the second glass plate in a first horizontal direction and a second nozzle that is shorter than the first glass plate or the second glass plate in the first horizontal direction are provided alternately and repeatedly in a second horizontal direction that is perpendicular to the first horizontal direction and discharge gas toward the first glass plate or the second glass plate in a vertical direction.

8. The method for producing laminated glass for automobile windows according to claim 7, wherein a plurality of third nozzles provided at an interval in the first horizontal direction discharge the gas toward one edge of the first glass plate or one edge of the second glass plate in the vertical direction.

9. The method for producing laminated glass for automobile windows according to claim 8, wherein the third nozzle is provided so as to be perpendicular to the one edge of the first glass plate or the one edge of the second glass plate as viewed in the vertical direction.

10. A method for producing laminated glass for automobile windows that includes a first glass plate, an interlayer film, and a second glass plate in this order from a vehicle-exterior side toward a vehicle-interior side, the method comprising:
heating the first glass plate or the second glass plate,
bend forming the heated first glass plate or the heated second glass plate, and
cooling the bend-formed first glass plate or the bend-formed second glass plate by gas,
wherein a plurality of third nozzles provided at an interval in a first horizontal direction discharge the gas toward one edge of the first glass plate or one edge of the second glass plate in a vertical direction, and the third nozzle is provided so as to be perpendicular to the one edge of the first glass plate or the one edge of the second glass plate.
